Europäisches Patentamt

European Patent Office

Office européen des brevets

(19)

(11) EP 1 057 783 A2

(12) **EUROPEAN PATENT APPLICATION**

(43) Date of publication:
06.12.2000 Bulletin 2000/49

(51) Int Cl.[7]: **C01G 23/00**, H01M 4/48,
H01M 10/40

(21) Application number: 00304696.8

(22) Date of filing: 02.06.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 03.06.1999 JP 15648399
19.10.1999 JP 29653199
22.03.2000 JP 2000080615

(71) Applicant: **TITAN KOGYO KABUSHIKI KAISHA**
**Ube-shi Yamaguchi-ken (JP)**

(72) Inventors:
• **Majima, Hiroshi,**
**c/o Titan Kogyo Kabushiki Kaisha**
**Ube-shi, Yamaguchi-ken (JP)**
• **Kubota, Mamoru,**
**c/o Titan Kogyo Kabushiki Kaisha**
**Ube-shi, Yamaguchi-ken (JP)**
• **Nakajima, Ryosuke,**
**c/oTitan Kogyo Kabushiki Kaisha**
**Ube-shi, Yamaguchi-ken (JP)**

(74) Representative: **Colmer, Stephen Gary et al**
**Mathys & Squire**
**100 Gray's Inn Road**
**London WC1X 8AL (GB)**

(54) **Lithium-Titanium composite oxides, processes for preparing them and uses thereof**

(57) The present invention provides a lithium-titanium composite oxide showing good handling during the preparation of electrodes for lithium secondary batteries or the like and also provides a lithium secondary battery with excellent characteristics. A lithium secondary battery is prepared from a lithium-titanium composite oxide comprising spherical secondary particles having a particle diameter of (1 - 50) μm formed by aggregation of primary particles, the composite oxide having a specific surface area of (0.5 - 10) m$^2$/g and consisting essentially of Li$_{4/3}$Ti$_{5/3}$O$_4$.

EP 1 057 783 A2

**Description**

The present invention relates to lithium-titanium composite oxides that are useful as active materials in lithium secondary batteries or the like, processes for preparing them and lithium secondary batteries using them.

Lithium-titanium composite oxides include lithium titanates represented by the general formula: $Li_{(1+x)}Ti_{(2-x)}O_y$ wherein x = -0.2 to 1.0 and y = 3 to 4, and typical examples thereof are $Li_{4/3}Ti_{5/3}O_4$, $LiTi_2O_4$ and $Li_2TiO_3$. They have a voltage of 1.5 V on a lithium basis and a long life. They have been successfully used as active materials in lithium ion batteries for clocks, and also are attractive as electrode materials for use in large-sized batteries because expansion and contraction are negligible during charging-discharging. These materials have been conventionally used as cathode active material but also are applicable as anode active material so that they are promising as both cathode and anode materials for batteries.

For example, the following lithium titanates or processes for preparing them have been proposed.

JPA No. 320784/95 describes a process for obtaining $Li_{4/3}Ti_{5/3}O_4$ by mixing anatase-type titanium dioxide and lithium hydroxide at an atomic ratio of 5:4 and firing the mixture at 900°C for 15 hours, and a process for obtaining $LiTi_2O_4$ by firing titanium dioxide and lithium carbonate at 800 - 950°C in a hydrogen stream.

However, lithium titanates obtained by these processes are less flowable because of their non-homogeneous morphology. This causes handling problems during mixing with conducting agents or binders in the preparation of electrodes, thus hindering homogeneous mixing. Moreover, these products are difficult to apply on collectors because they cannot sufficiently absorb/retain electrolytes, and therefore, any batteries with excellent cycling characteristics cannot be prepared.

JPA No. 309726/97 discloses a process for preparing a lithium titanate hydrate, comprising the steps of reacting a titanium compound with an ammonia compound in water to give a titanate compound, and reacting the titanate compound with a lithium compound in water to give the lithium titanate hydrate.

However, the lithium titanate obtained by this process is a hydrate, and therefore contains water. When $LiPF_6$ or $LiBF_4$ is used as electrolyte, water reacts with the electrolyte to release hydrofluoric acid, which in turn reacts with lithium or the counter electrode active material to undesirably deteriorate capacity or cycling.

JPA No. 309727/97 describes a process for obtaining a lithium titanate having voids in the particles by adding the step of dehydrating the lithium titanate hydrate under heat subsequently to the steps of the process mentioned just above.

However, the lithium titanate obtained by this process has a small particle size and a large surface area. Active materials for batteries should have a smaller particle size unless expansion/contraction occurs during charging-discharging, but too small particles make it difficult to ensure safety in case of misuse so that an adequate particle size is required.

JPA No. 309728/97 discloses a dense lithium titanate having a leaf- or plate-like particle shape, but such a particle shape affects flowability to deteriorate handling during mixing with conducting agents or binders in the preparation of electrodes, thus hindering homogeneous mixing and application on collectors.

JPA No. 139429/98 describes a process for preparing a lithium-titanium composite oxide, comprising reacting a lithium compound and a titanium compound soluble in polyitaconic acid or water with polyitaconic acid to give a composite polymer, and then subjecting said composite polymer to pyrolysis.

However, the lithium titanate obtained by this process also still had safety problems in case of misuse because of the small particle size and large surface area.

On the other hand, lithium secondary batteries using a lithium titanate have been expected to further improve in discharge capacity and battery characteristics.

In view of the foregoing, the present invention aims to provide a lithium-titanium composite oxide, which shows good handling during the preparation of electrodes for lithium secondary batteries or the like and good applicability on collectors and can provide a lithium secondary battery with less expansion of the electrode prepared therefrom and excellent characteristics, and a process for preparing it, as well as a lithium secondary battery with excellent charging-discharging characteristics and cycling characteristics using the lithium-titanium composite oxide.

As a result of careful studies to achieve the above object, we accomplished the present invention on the basis of the finding that lithium-titanium composite oxides prepared by a unique process form secondary particles having specific shape and size and have a specific oil absorption and excellent properties such as handling during the preparation of electrodes and that lithium ion batteries using the lithium-titanium composite oxides show excellent charging-discharging characteristics.

Accordingly, lithium-titanium composite oxides of the present invention comprise spherical secondary particles having a particle diameter of 1 - 50 µm formed by aggregation of primary particles, the composite oxides having a specific surface area of 0.5 - 10 $m^2$/g and consisting essentially of $Li_{4/3}Ti_{5/3}O_4$.

Lithium-titanium composite oxides of the present invention are characterized in that the secondary particles formed by aggregation of primary particles are spherical with the roundness of the projective particle image being 0.950 or more, the composite oxides having an oil absorption of 30 g / 100 g or more but 60 g / 100 g or less and consisting essentially of $Li_{4/3}Ti_{5/3}O_4$.

A process for preparing a lithium-titanium composite oxide according to the present invention comprises the steps of mixing a water-soluble lithium salt or lithium carbonate and a titanium oxide at an atomic ratio of Li to Ti of 4: 5, drying the mixture to form spherical particles and heat-treating the spherical particles in a gas stream.

The titanium oxide here can be anatase-type titanium dioxide having a purity of 95% or more or an aqueous titanium oxide having a purity of 90% or more.

The lithium-titanium composite oxides can be used as cathode active material to form a battery cathode.

The lithium titanium composite oxides can also be used as anode active material to form a battery anode.

The battery cathode or the battery anode can be used to form a lithium secondary battery.

Lithium secondary batteries of the present invention are prepared from a lithium-titanium composite oxide as cathode active material and metallic Li as an anode and have a charge-discharge voltage of 1.4 - 1.6 V and an initial discharge capacity of 150 mAh/g or more with the deviation width of the discharge capacity being within 2% except for the first cycle during repeated 10 cycles of charging-discharging in charge-discharge tests.

Lithium-titanium composite oxides of the present invention show good handling during the preparation of electrodes for lithium secondary batteries or the like and good applicability on collectors and can provide a lithium secondary battery with less expansion of the electrode prepared therefrom and excellent characteristics, because they comprise spherical secondary particles having a particle diameter of 1 - 50 μm formed by aggregation of primary particles, the composite oxides having a specific area surface of 0.5 - 10 $m^2$/g and consisting essentially of $Li_{4/3}Ti_{5/3}O_4$.

Because of the spherical shape and high oil absorption, lithium-titanium composite oxides of the present invention are excellent in applicability during the use as battery active materials, and the resulting lithium secondary batteries have a high initial discharge capacity and excellent charging-discharging characteristics and cycling characteristics with less deviation.

The process for preparing a lithium titanium composite oxide according to the present invention comprises the steps of mixing a water-soluble lithium salt or lithium carbonate and a titanium oxide at an atomic ratio of Li to Ti of 4:5, drying said mixture to form spherical particles and heat-treating said spherical particles in a gas stream, whereby said lithium-titanium composite oxide can be efficiently and reliably obtained.

Moreover, lithium secondary batteries using said lithium-titanium composite oxides as anode active material or cathode active material satisfy the theoretical charge-discharge voltage and have a high discharge capacity and excellent cycling characteristics with high current and power efficiencies.

Fig. 1 is an X-ray diffraction pattern of a lithium-titanium composite oxide of the present invention.

Fig. 2 is a scanning electron microphotograph of a lithium-titanium composite oxide of the present invention.

Fig. 3 is a scanning electron microphotograph of a milled sample of a lithium-titanium composite oxide of the present invention.

Fig. 4 is a sectional view of a coin battery using a lithium-titanium composite oxide according to an embodiment of the present invention for the anode or cathode.

Fig. 5 is a graph showing discharge curves of a coin battery using a lithium-titanium composite oxide according to an embodiment of the present invention and a lithium-titanium composite oxide of Comparative example 1 or 2 for the cathode.

Fig. 6 is a graph showing charge-discharge curves of a coin battery using a lithium-titanium composite oxide according to an embodiment of the present invention for the anode.

Fig. 7 is a sectional view of a single-cell battery using a lithium-titanium composite oxide according to an embodiment of the present invention for the anode.

Fig. 8 shows charge-discharge curves of a single-cell battery using a lithium-titanium composite oxide according to an embodiment of the present invention for the anode.

Fig. 9 is a graph showing the current efficiency and the power efficiency of a single-cell battery using a lithium-titanium composite oxide according to an embodiment of the present invention for the anode.

Fig. 10 is a scanning electron microphotograph of the lithium-titanium composite oxide of Comparative example 1.

Fig. 11 is a scanning electron microphotograph of the lithium-titanium composite oxide of Comparative example 2.

Fig. 12 is an X-ray diffraction pattern of the lithium-titanium composite oxide of Comparative example 2.

Fig. 13 is an X-ray diffraction pattern of the lithium-titanium composite oxide of Comparative example 3. Numeral references represent the following elements: 4: cathode; 5: anode; 9: cathode; 10: anode.

Lithium-titanium composite oxides of the present invention comprises secondary particles having a particle diameter of 1 - 50 μm formed by aggregation of primary particles, preferably fine particles having a particle diameter of 0.1 - 1 μm.

Secondary particles that are aggregates of primary particles observed under electron microscope or the like have a spherical shape with homogeneous particle diameter, whereby they provide good handling and homogeneous mixing with conducting agents or binders as compared with those having a sheet-like or non-homogeneous shape.

In order to decrease activity for the purpose of ensuring safety during the operation of the battery, the specific surface area is preferably 0.5 - 10 $m^2$/g, more preferably 1 - 7 $m^2$/g. Lithium-titanium composite oxides in the form of spherical secondary particles having a small specific surface area according to the present invention can be used as electrode active material to provide a battery having a high charge-discharge capacity and excellent cycling stability and safety. The average secondary particle diameter may range from 1 to 50 $\mu$m, but preferably 1 to 20 $\mu$m. In case of spherical particles, the particles of $Li_{4/3}Ti_{5/3}O_4$ theoretically have specific surface areas of 1.7, 0.35 and 0.17 $m^2$/g when the particle diameters are 1, 5 and 10 $\mu$m, respectively. Lithium-titanium composite oxides of the present invention have moderately irregular surfaces or internal voids, whereby the specific surface area is greater than the theoretical value, e.g. 3 $m^2$/g for the average particle diameter of 5 $\mu$m. This may improve battery characteristics. Thus, particle diameters of less than 1 $\mu$m are undesirable because the specific surface area exceeds 10 $m^2$/g so that the resulting battery has too high activity. Particle diameters greater than 50 $\mu$m are also undesirable because the specific surface area becomes smaller than 0.5 $m^2$/g to lower activity.

Lithium-titanium composite oxides of the present invention have a spherical shape with homogeneous diameter wherein the roundness of the projective particle image is 0.950 or more, which improves handling and applicability on collectors as compared with those having a sheet-like or non-homogeneous shape. The roundness of less than 0.950 undesirably affects applicability. The roundness here is defined by the following equation, and the projective image approaches a circle as the roundness approaches 1.

$$\text{Roundness} = \text{Peripheral length of a corresponding circle} \, /$$

$$\text{Peripheral length of a projective particle image}$$

The oil absorption as measured by the procedure defined in JIS K5101 should be 30 g / 100 g or more but 60 g/ 100 or less to readily absorb and retain the electrolyte, whereby a battery with excellent cycling characteristics can be prepared. If the oil absorption is less than 30 g / 100 g, it is difficult to absorb and retain the electrolyte. If it exceeds 60 g / 100 g, unduly large amounts of solvents are needed for preparing electrode compounds.

Lithium-titanium composite oxides of the present invention consist essentially of $Li_{4/3}Ti_{5/3}O_4$, which may correspond to a powder X-ray diffraction pattern in which each of the peak strengths of the main peak of anatase-type titanium dioxide at 3.51 angstroms, the main peak of rutile-type titanium dioxide at 3.25 angstroms and the peak indicating the production of $Li_2TiO_3$ at 2.07 angstroms is 15 or less, preferably 5 or less when the peak strength of the main peak of $Li_{4/3}Ti_{5/3}O_4$ at 4.83 angstroms is supposed to be 100. Especially, the peak strength of 2.07 angstroms is preferably smaller to increase the initial discharge capacity during charging-discharging of the battery.

A process for preparing a lithium-titanium composite oxide according to the present invention typically comprises the steps of drying starting materials while homogeneously mixing them to form spherical particles and heat-treating the spherical particles in a gas stream without requiring any washing step, whereby the target product can be prepared without consideration for the environmental influence of effluents.

In the process for preparing a lithium-titanium composite oxide according to the present invention, a lithium salt such as lithium hydroxide, lithium hydroxide monohydrate, lithium oxide, lithium hydrogencarbonate or lithium carbonate is mixed with or dissolved in water. This solution is combined to anatase-type titanium dioxide or aqueous titanium oxide at an atomic ratio of Li to Ti of 4:5. The slurry concentration of the mixed solution is preferably 0.48 - 4.8 mol /L for Li materials and 0.60 - 6.00 mol /L for Ti materials. Concentrations higher than the above-mentioned range need a strong stirring force for homogeneous mixing. Clogging of piping or other troubles may also be invited during drying. Concentrations lower than the above-mentioned range are also undesirable because more water evaporates to increase drying cost. The mixed solution is dried with stirring into spherical particles. This may be carried out by spray drying, fluidized bed drying, rolling granulation drying or freeze-drying alone or in combination. The dried material is heat-treated in a gas stream such as $N_2$ gas, $O_2$ gas, air or a combination in which any of these gases are mixed in any proportions.

Heat treatment may be carried out in any of the gases mentioned above, but the resulting battery has a low internal resistance when $N_2$ gas is used. Thus, $N_2$ gas is preferred to obtain higher capacity. The heat treatment temperature is preferably 700 - 1000°C, more preferably 750 - 900°C. Below 700°C, the reaction between the titanium oxide and the lithium compound is not sufficient. Above 1000°C, the lithium-titanium composite oxide sinters to fail in keeping the relationship between the secondary particle diameter and the specific surface area according to the present invention and in keeping the required oil absorption according to the present invention, which results in low battery characteristics.

The starting material of the titanium oxide used as a production material may be any of chlorides, sulfates or organic salts, etc. The crystal structure may be any of anatase-type or amorphous-type, etc., but it is preferable to use anatase-type titanium dioxide or aqueous titanium oxide to prepare a lithium-titanium composite oxide with excellent discharge capacity or battery characteristics as shown in the present invention. Rutile-type titanium oxide is not preferred because good battery characteristics cannot be obtained as described below. Anatase-type titanium dioxide must have a purity of at least 95% or more, preferably 98% or more. If the purity is less than 95%, the capacity per weight of the active material is undesirably lowered. High purities such as 99.99% may be used, but at a high cost. Viewed from the aspect of electrode active material, the effect of the particle diameter and shape prevails over the effect of high purification when the purity is 98% or more. Aqueous titanium oxide should have a purity of 90% or more before firing so as to give anatase-type titanium dioxide having the above range of purity after firing for the same reasons as described above about anatase-type titanium dioxide.

A lithium secondary battery prepared from said lithium-titanium composite oxide as cathode active material and metallic Li as an anode has a charge-discharge voltage of 1.4 - 1.6 V and an initial discharge capacity of 150 mAh/ g or more in charge-discharge tests with excellent cycling stability as evidenced from the deviation width of the discharge capacity being within 2% except for the first cycle during repeated 10 cycles of charging-discharging in charge-discharge tests.

Then, the use of lithium-titanium composite oxides of the present invention as anode active material was examined. In this case, the cathode active material may be any of lithium-cobalt composite oxides, lithium-nickel composite oxides and lithium-manganese composite oxides, but a lithium secondary battery having a charge-discharge voltage of 2.4 V with less deviation can be prepared as described below when $LiCoO_2$ is used as cathode active material.

When a lithium battery prepared from a lithium-titanium composite oxide synthesized as described above as anode active material and $LiCoO_2$ as cathode active material is subjected to 8 cycles of charge-discharge tests, the battery efficiency is very good as evidenced from the initial current efficiency of 98% or more and the initial power efficiency of 96% or more in each cycle.

With reference to the attached drawings, Examples of the present invention and Comparative examples are described below, but the following Examples are not to be construed as limiting the invention.

EXAMPLES

Example 1

In 451 g of water was dissolved 1.962 moles of lithium hydroxide ($LiOH \cdot H_2O$) with stirring. Anatase-type titanium oxide at 98% purity (2.453 moles as $TiO_2$) was added to the solution and stirred. The atomic ratio of Li to Ti was 4:5. The volume of the mixed slurry was 0.502 L, and the slurry concentrations of the Li source and the Ti source before drying were 3.91 mol/L and 4.89 mol/L, respectively. The mixture was spray-dried at 110°C, and then the dried mixture was heat-treated at 800°C for 6 hrs in an $N_2$ gas atmosphere to prepare a lithium-titanium composite oxide.

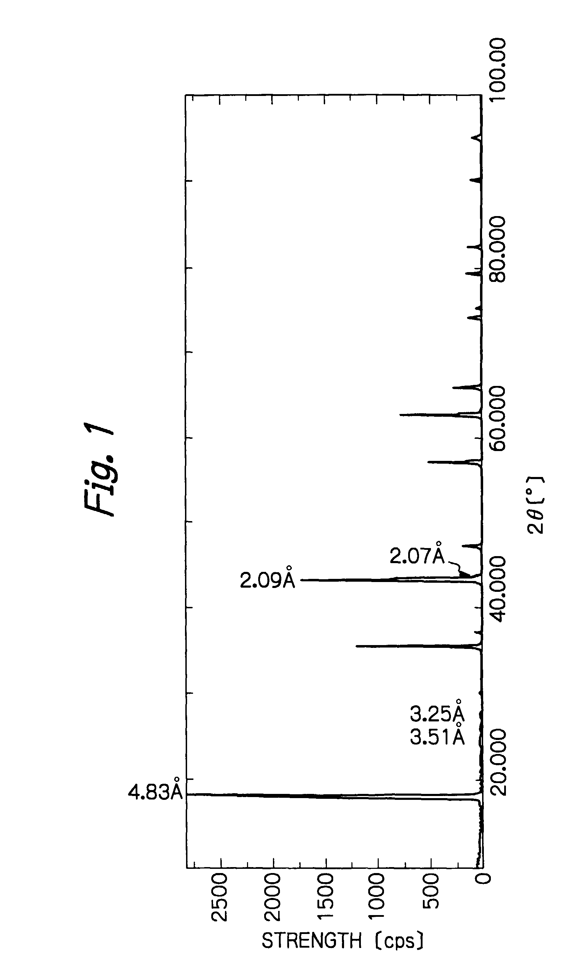

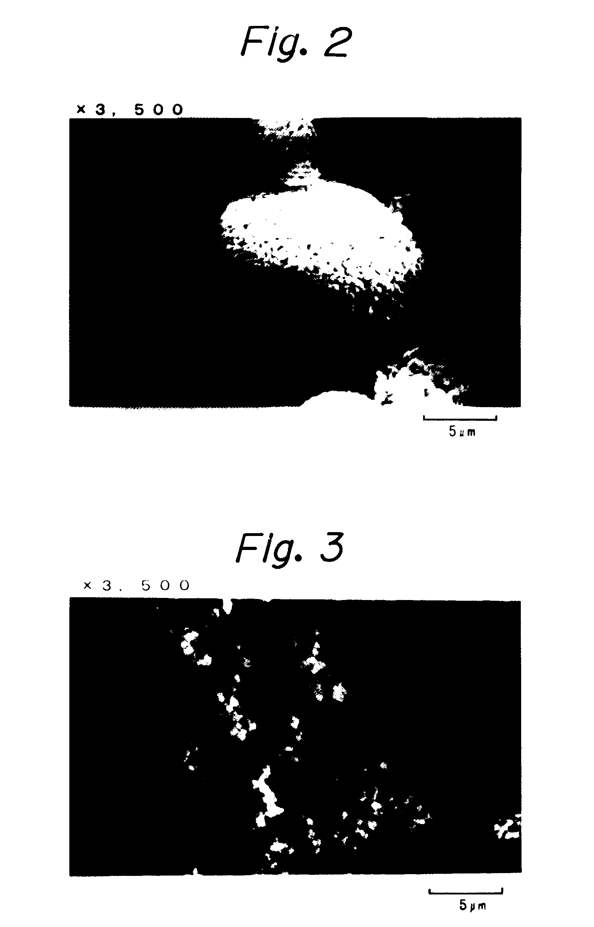

This sample was subjected to X-ray diffraction analysis using Cu as target, specific surface area measurement and scanning electron microphotography. Fig. 1 shows the X-ray diffraction pattern. As shown in Fig. 1, the peak strengths of 3.51 angstroms and 3.25 angstroms were less than 1 while the peak strength of 2.07 angstroms was 3 when the peak strength of 4.83 angstroms was supposed to be 100. The roundness and oil absorption of this lithium-titanium composite oxide were determined. The roundness was measured with a flow-type particle image analyzer made by Hosokawa Micron Corp., and the oil absorption was determined according to JIS K5101. The result of specific surface area measurement by $N_2$ gas adsorption was 2.6 $m^2$/g. Fig. 2 shows a scanning electron microphotograph. As shown in Fig. 2, the particles have a spherical shape of 1 - 20 μm in particle diameter with irregular surface. Fig. 3 shows a scanning electron microphotograph of a ball-milled sample of this fired material. As shown in Fig. 3, it is found that the primary particle diameter of sphere-forming particles is 0.1 - 1 μm. Thus, particles having a primary particle diameter of 0.1 - 1.0 μm aggregated to form secondary particles having a particle diameter of 1 - 20 μm.

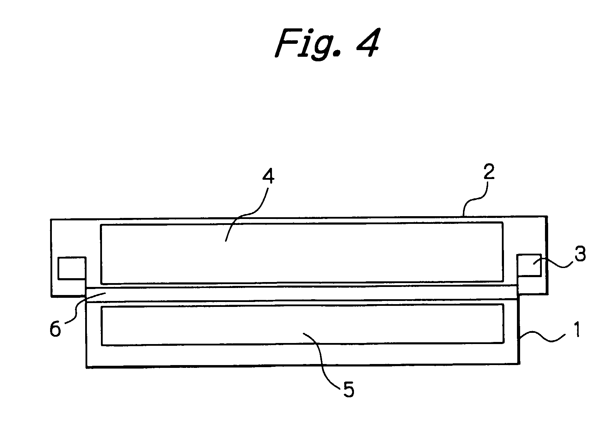

Then, an electrode compound for cathode was prepared from the above dried and fired material without milling as active material. Eighty-two parts by weight of the lithium-titanium composite oxide as active material, 10 parts by weight of acetylene black as conducting aid, 8 parts by weight of a fluoroplastic as binder and n-methyl-2-pyrrolidone as solvent were mixed. The electrode compound was applied on a copper foil in a dried thickness of 0.03 $g/cm^2$ by the doctor blade method. After vacuum drying at 150°C, the compound was roll-pressed into 80% of the initial thickness of the electrode compound. A section punched out in an area of 1 $cm^2$ was placed as a cathode 4 in a coin battery as shown in Fig. 4.

In Fig. 4, the anode 5 was a metallic Li plate, the electrolyte was an equivalent volume mixture of ethylene carbonate and dimethyl carbonate, which contains 1 mol/L $LiPF_6$ dissolved therein, and the separator 6 was a polypropylene porous membrane. The overall size of the battery including a cathode case 2 and an anode case 1 containing the cathode and anode, respectively, was about 20 mm in outer diameter and about 3 mm in height.

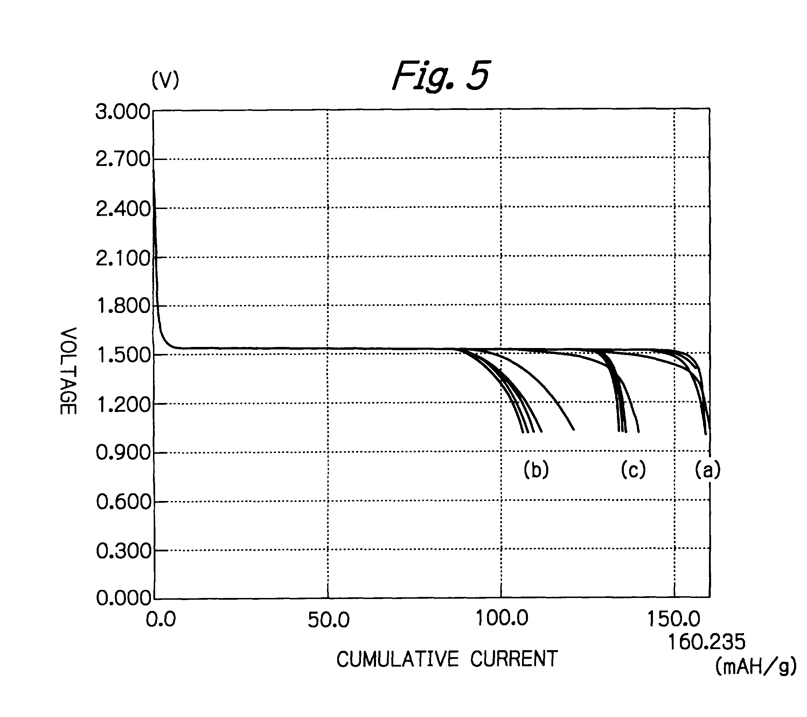

The coin battery prepared as above was subjected to 10 cycles of charging to 3.0 V and then discharging to 1.0 V at a constant current density of 0.4 mA/cm$^2$. Fig. 5(a) shows discharge curves of the coin battery using the lithium-titanium composite oxide of this example as cathode active material and metallic Li as an anode. It is shown that the coin battery of this example satisfies the theoretical voltage of 1.5 V and has a large initial discharge capacity value such as 160 mAh/g.

Then, a coin battery was prepared from the lithium-titanium composite oxide of this example as anode active material and LiCoO$_2$ as cathode active material, and subjected to battery tests. The active materials were prepared in the same manner as above.

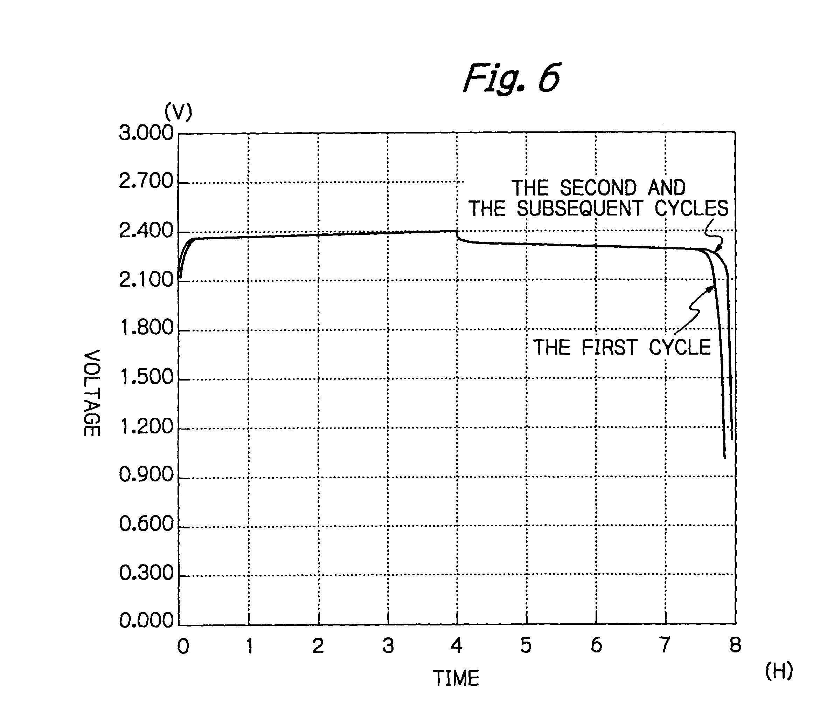

Fig. 6 shows charge-discharge curves of thus prepared coin battery subjected to repeated cycles of 4-hour charge-discharge. As illustrated, this battery had a voltage of 2.4 V and showed good overlapping in both charge and discharge curves except for the first cycle, which demonstrates that the present lithium-titanium composite oxide is also useful as an anode active material.

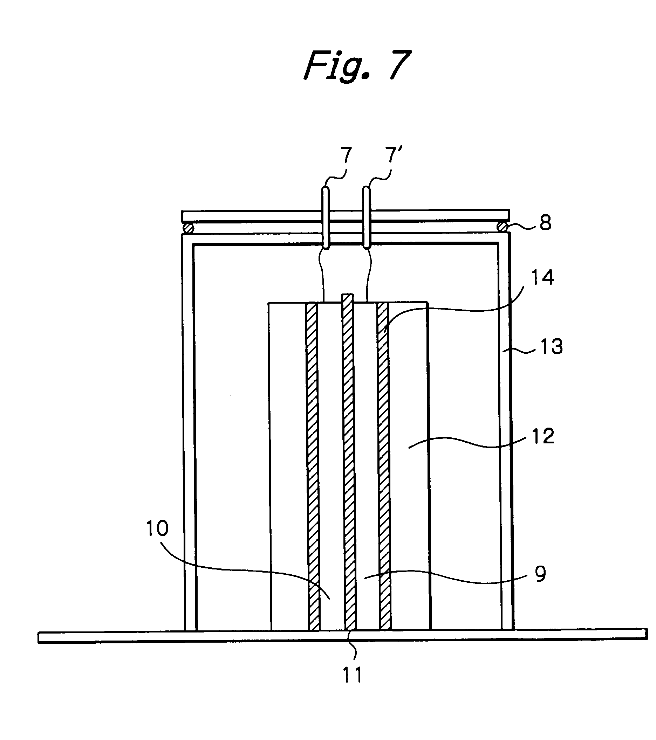

Then, a single-cell battery using the present lithium-titanium composite oxide as anode active material and LiCoO$_2$ as cathode active material was subjected to battery tests. Fig. 7 shows the structure of the single-cell battery. A cathode 9 and an anode 10 were prepared by the same procedure as described above about the coin battery and cut out in 10 cm x 10 cm, then opposed through a separator 11 and sandwiched between SUS plates 12 made of SUS304 having a thickness of 3 mm through resin plates 14, and then bolted with a torque wrench to apply a pressure of about 3 kg/cm$^2$ on the electrodes. This assembly was inserted into an SUS case 13 made of SUS304 and internally coated with a fluoroplastic, and an electrolyte similar to that of the coin battery was injected into the case in a dry box, and then the case was closed with a cover via an O-ring made of Byton and internally evacuated to 650 mm Hg via the port of a safety valve provided on the cover and maintained at that pressure for 100 hrs. After the impregnation with the electrolyte was terminated, the cover was removed and an excess of the electrolyte was withdrawn, and then external electrode terminals 7, 7' were connected to prepare a test battery. A cycle of constant current charging at a current density of 0.4 mA/cm$^2$ for 4 hrs and discharging at the same current density was repeated. Charge-discharge cycling tests were performed at an upper voltage limit of 4.2 V and a discharge capacity of the battery of 120 mAh/g.

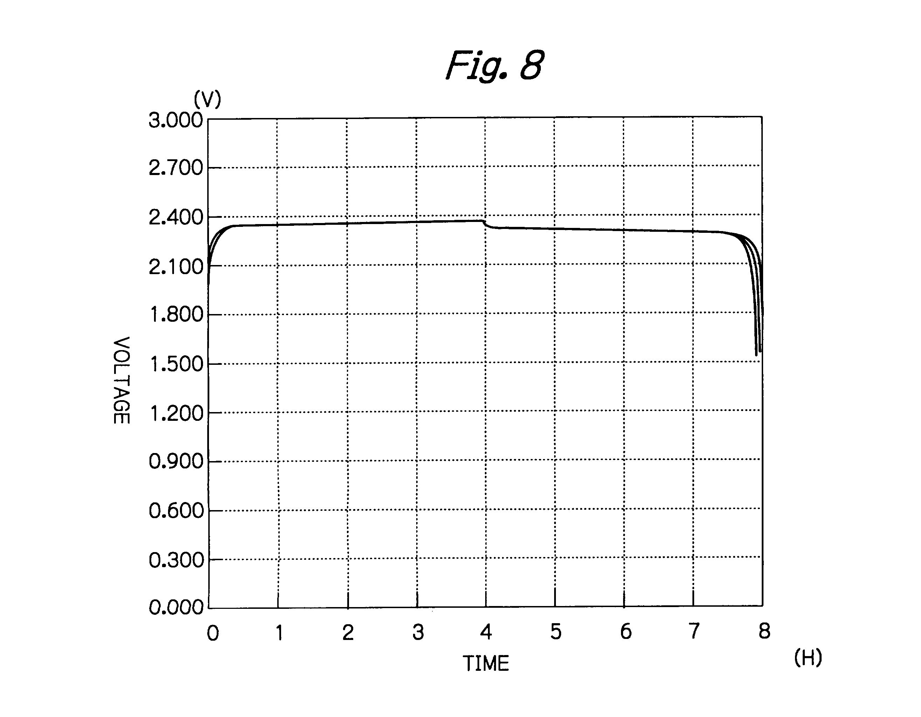

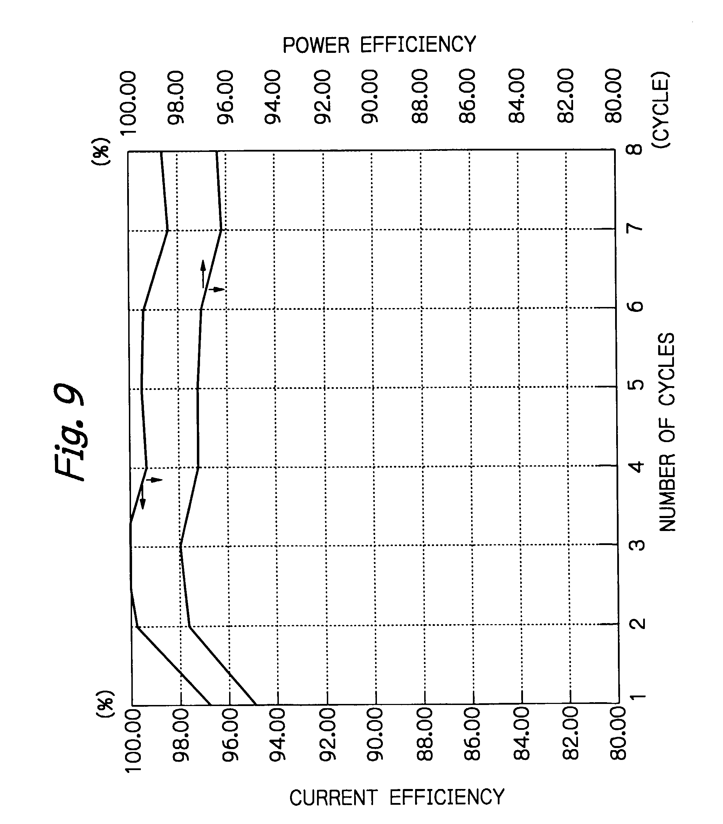

Fig. 8 shows charge-discharge curves of the single-cell battery. Fig. 8 shows that the single-cell battery of this example has a voltage of 2.4 V with less deviation due to repeated charging-discharging. Fig. 9 shows cycling change of the current efficiency and power efficiency of the single-cell battery. Here, the current efficiency X and the power efficiency Y were calculated according to the following equations.

$$X = (\text{Cumulative current during discharge (Ah)} / \text{Cumulative current during charge (Ah)}) \times 100 \ (\%)$$

$$Y = (\text{Cumulative power during discharge (AhV)} / \text{Cumulative power during charge (AhV)}) \times 100 \ (\%).$$

It is shown that high efficiencies are obtained in the second and the subsequent cycles, i.e. current efficiency of 98% or more and power efficiency of 96% or more.

Example 2

Li$_{4/3}$Ti$_{5/3}$O$_4$ was synthesized in the same manner as in Example 1 except that the heat treatment conditions were 950°C in the atmosphere.

Comparative example 1

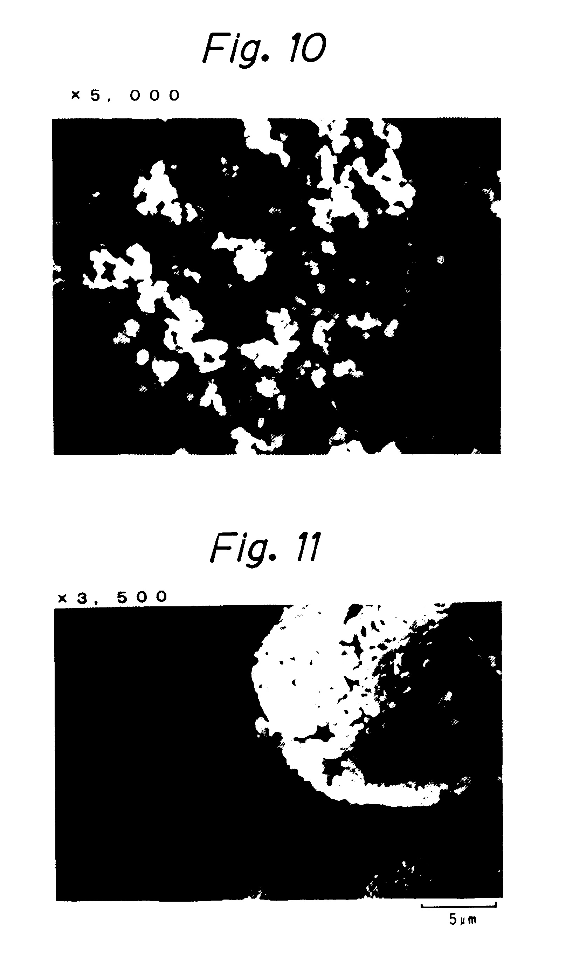

A mixture was prepared by mixing the same materials under the same conditions as in Example 1 and dried at 110°C in the atmosphere for 12 hrs. The dried mixture was heat-treated under the same conditions as in Example 1 to give a lithium-titanium composite oxide. Fig. 10 shows a scanning electron microphotograph of the heat-treated material. It is shown that the heat-treated material is amorphous.

A coin battery was prepared from the heat-treated material as cathode active material and metallic Li as an anode and evaluated in the same manner as in Example 1. Fig. 5(b) shows discharge curves of the coin battery thus prepared. It is shown that this coin battery satisfies the theoretical voltage of 1.5 V but the discharge capacity is about 110 mAh/g, i.e. lower than 160 mAh/g of Example 1, with the deviation due to repeated charge-discharge being 10% or more. This means that particles of lithium-titanium composite oxides for lithium batteries should be spherical.

The roundness, oil absorption, battery voltage and initial discharge capacity of the above Examples 1 - 2 and Comparative example 1 are collectively shown in Table 1.

Table 1

|  | Roundness | Oil absorption (g/ 100 g) | Voltage (V) | Initial Discharge capacity (mAh/g) | Deviation width of initial discharge capacity*(%) |
|---|---|---|---|---|---|
| Example 1 | 0.954 | 48 | 1.5 | 160 | 1.2 |
| Example 2 | 0.957 | 36 | 1.5 | 165 | 0.9 |
| Comparative example 1 | 0.941 | 25 | 1.5 | 110 | >10 |

* The second to tenth cycles

As demonstrated from the results in Table 1, the battery voltages of Examples 1 - 2 and Comparative example 1 all satisfy the theoretical value of 1.5 V, but the initial discharge capacity of Comparative example 1 was 110 mAh/ g, i.e. lower than the initial discharge capacities 160 - 165 mAh/g of Examples 1 - 2. During repeated 10 cycles of charging-discharging, the deviation width of discharge capacity except for the first cycle was about 1% in Examples 1 - 2 as compared with 10% or more in Comparative example 1, which demonstrates that the lithium-titanium composite oxides of the present invention can provide lithium batteries with excellent cycling characteristics.

Comparative example 2

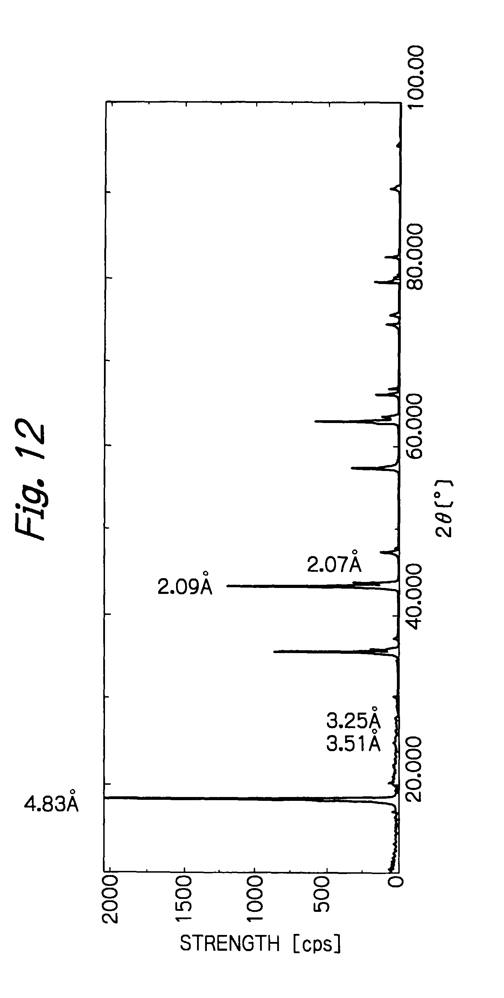

A mixture having an atomic ratio of Li to Ti of 1:1 was prepared from the same materials as used in Examples and spray-dried at 110°C, and then the dried material was heat-treated at 800°C for 6 hrs in an $N_2$ gas atmosphere to prepare a lithium-titanium composite oxide. Figs. 11 and 12 show a scanning electron microphotograph and an X-ray diffraction pattern of the heat-treated material. Fig. 11 shows that the heat-treated material is spherical. In the X-ray diffraction pattern shown in Fig. 12, the peak strengths of 3.51 angstroms and 3.25 angstroms were less than 1 while the peak strength of 2.07 angstroms was 19 when the peak strength of 4.83 angstroms was supposed to be 100. This suggests that $Li_2TiO_3$ was produced.
A coin battery was prepared from the heat-treated material as cathode active material and metallic Li as an anode, and evaluated in the same manner as in Examples. Fig. 5(c) shows discharge curves of the coin battery thus prepared. It is shown that this coin battery satisfies the theoretical voltage of 1.5 V but the discharge capacity is about 128 mAh/g, i.e. lowr than 160 mAh/g shown in Example 1(a). This discharge capacity loss is attributed to the production of $Li_2TiO_3$, and therefore, the atomic ratio of Li to Ti in the step of mixing materials should be 4:5.

Comparative example 3

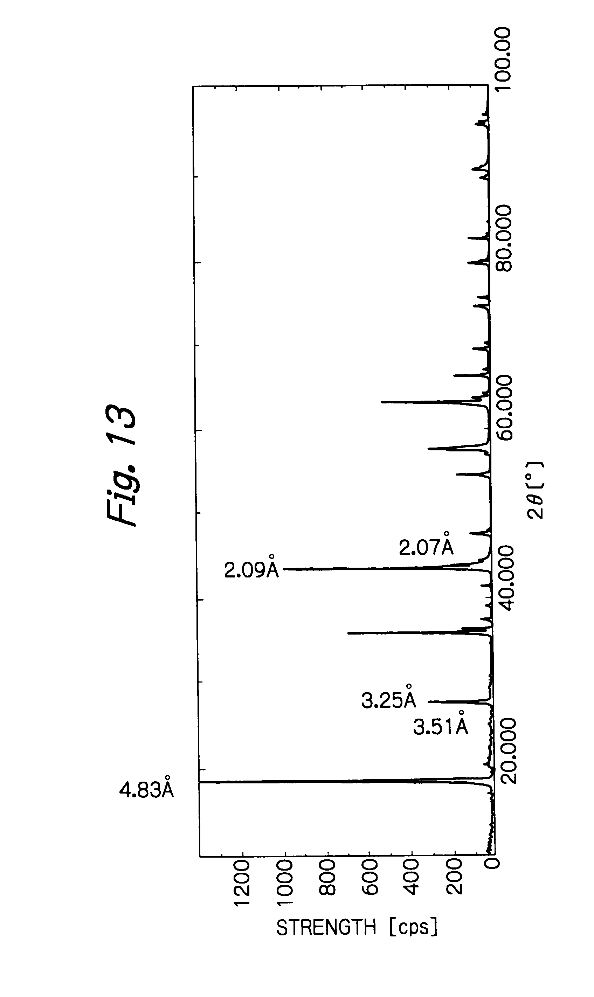

A mixture was prepared using rutile-type titanium oxide at 99% purity under the same conditions as in Examples, and dried at 110°C in the atmosphere for 12 hrs. The dried mixture was heat-treated under $O_2$ gas at 800°C for 12 hrs. Fig. 13 shows an X-ray diffraction pattern of the heat-treated material, in which the peak strengths of 3.25 angstroms and 2.07 angstroms were 18 and 6, respectively, when the peak strength of 4.83 angstroms was supposed to be 100, suggesting the production of rutile-type titanium oxide and $Li_2TiO_3$. As also shown in Comparative example 2, battery characteristics of this product seem to be insufficient. Thus, rutile-type titanium oxide is not suitable as a material for obtaining a product for coin batteries having good characteristics as shown in Examples.

**Claims**

1. A lithium-titanium composite oxide comprising spherical secondary particles having a particle diameter of 1 - 50 μm formed by aggregation of primary particles, said composite oxide having a specific surface area of 0.5 - 10 $m^2$/ g and consisting essentially of $Li_{4/3}Ti_{5/3}O_4$.

2. A lithium-titanium composite oxide wherein the secondary particles formed by aggregation of primary particles are spherical with the roundness of the projective particle image being 0.950 or more, said composite oxide having an oil absorption of 30 g / 100 g or more but 60 g / 100 g or less and consisting essentially of $Li_{4/3}Ti_{5/3}O_4$.

3. A process for preparing a lithium-titanium composite oxide, comprising the steps of mixing a water-soluble lithium salt or lithium carbonate and a titanium oxide at an atomic ratio of Li to Ti of 4:5, drying said mixture to form spherical particles and heat-treating said spherical particles in a gas stream.

4. The process of Claim 3 wherein said titanium oxide is anatase-type titanium dioxide having a purity of 95% or more or an aqueous titanium oxide having a purity of 90% or more.

5. A battery cathode comprising the lithium-titanium composite oxide of Claim 1 or 2 as cathode active material.

6. A battery anode comprising the lithium-titanium composite oxide of Claim 1 or 2 as anode active material.

7. A lithium secondary battery comprising the battery cathode of Claim 5 or the battery anode of Claim 6.

8. A lithium secondary battery prepared from a lithium-titanium composite oxide as cathode active material and metallic Li as an anode, said battery having a charge-discharge voltage of 1.4 - 1.6 V and an initial discharge capacity of 150 mAh/g or more in charge-discharge tests with the deviation width of said discharge capacity being within 2% except for the first cycle during repeated 10 cycles of charging-discharging in charge-discharge tests.

Fig. 1

## Fig. 2

×3,500

5 μm

## Fig. 3

×3,500

5 μm

# Fig. 4

**Fig. 5**

Fig. 6

# Fig. 7

## Fig. 8

EP 1 057 783 A2

Fig. 9

## Fig. 10

× 5,000

## Fig. 11

× 3,500

5 μm

Fig. 12

Fig. 13